# EUROPEAN PATENT APPLICATION

(11) **EP 4 190 641 A1**
(43) Date of publication of application: **07.06.2023**
(21) Application number: 22183688.5
(22) Date of filing: 07.07.2022
(51) Int. Cl.: B60R 11/00, H04M 1/04, B60R 11/02

(54) **MAGNETIC VEHICLE BRACKET**

(30) Priority: 03.12.2021 CN 202123040345 U
(71) Applicant: Shenzhen City Qicaiguohong Technology Co., Ltd., Heping Community, Baoan District Shenzhen Guangdong (CN)
(72) Inventor: LI, Yunfang, Shenzhen (CN)
(74) Representative: Loo, Chi Ching

(57) **Abstract**

A magnetic vehicle bracket includes a fixed part (1) and an adsorption part (2); wherein the adsorption part (2) is provided with an magnetic member (3); an elastic member (4) and a limit part are arranged between the adsorption part (2) and the fixed part (1), the adsorption part (2) is capable of sliding relative to the fixed part (1); the limit part is configured to limit a relative position of the adsorption part (2) and the fixed part (1) after sliding; the adsorption part (2) and the fixed part (1) are restored to an initial position by elastic force of the elastic member (4) after sliding.

## Description

### CROSS REFERENCE TO RELATED APPLICATIONS

The present application claims foreign priority of Chinese Patent Application No. CN202123040345.4, filed on December 03, 2021.

### TECHNICAL FIELD

The present disclosure relates to vehicle brackets, in particular to a magnetic vehicle bracket.

### BACKGROUND

Magnetic bracket in the market mounts the mobile phone or other terminal equipment through magnetism. The mobile phone or other terminal equipment fixed by magnetic force is tent to fall off from the bracket when the vehicle encounters severe shaking. If this problem is solved through increasing the magnetic force of magnetic parts, the product cost will rise and it will be difficult to take the equipment from the bracket.

### SUMMARY OF THE DISCLOSURE

The technical problem to be solved by the present disclosure is to overcome the defects of the prior art and provide a magnetic vehicle bracket.

In order to solve the above-mentioned technical problem, the present disclosure provides a magnetic vehicle bracket including a fixed part and an adsorption part; the adsorption part is provided with an magnetic member; an elastic member and a limit part are arranged between the adsorption part and the fixed part, the adsorption part is capable of sliding relative to the fixed part; the limit part is configured to limit a relative position of the adsorption part and the fixed part after sliding; the adsorption part and the fixed part are restored to an initial position by elastic force of the elastic member after sliding.

In some embodiments, the limit part includes a protruding post provided on the adsorption part; the first sliding slot is communicated with the first channel; an edge of the first sliding slot is provided with an anti-separation edge; the protruding post defines a notch; the protruding post is arranged in the first sliding slot, and the anti-separation edge is received in the notch; the fixed part is provided with an elastic member, one end of the elastic member is in contact with the protruding post, and the other end is in contact with a top edge of the first channel.

In some embodiments, the fixed part defines a mounting slot communicated with the first sliding slot, an elastic arm is arranged between the mounting slot and the first sliding slot, a side wall of the elastic arm close to the mounting groove is a smooth wall, and another side wall of the elastic arm close to the first sliding slot is a blocking wall.

In some embodiments, the protruding post, the first sliding slot, the first channel, and the elastic member form a mounting assembly, a number of the mounting assembly is two or four.

In some embodiments, the adsorption part defines a second sliding slot; a chute groove communicated with the second sliding slot is defined by the adsorption part; the fixed part is provided with a sliding column corresponding to the second sliding slot, the sliding column is provided with a limit bar, and the limit bar is inserted into the chute groove; the limit part includes a stopper arranged in the second sliding slot; the adsorption part defines a second channel, and the fixed part is provided with a first stopper, the first stopper is arranged in the second channel, the elastic member is arranged between the first stopper and a bottom edge of the second channel.

In some embodiments, the adsorption part defines a second sliding slot; a chute groove communicated with the second sliding slot is defined by the adsorption part; the fixed part is provided with a sliding column corresponding to the second sliding slot, the sliding column is provided with a limit bar, and the limit bar is inserted into the chute groove; the limit part includes a stopper arranged in the second sliding slot; the adsorption part defines a third channel, and the fixed part is provided with a first stopper, and the adsorption part is provided with a second stopper, the second stopper is arranged in the third channel, and the elastic member is arranged between the first stopper and the second stopper.

In some embodiments, an edge of the adsorption part is provided with a first wrapping structure, the fixed part is inserted into the wrapping structure.

In some embodiments, an edge of the fixed part is provided with a second wrapping structure, the adsorption part is inserted into the wrapping structure.

In some embodiments, a fourth channel is defined by the fixed part; a third stopper is arranged on the adsorption part, the third stopper is inserted into the fourth channel, and the elastic member is arranged between the third stopper and a bottom edge of the fourth channel.

In some embodiments, the limit part includes a first blocking groove defined by the adsorption part and a first fixed protrusion provided on the fixed part, the first fixed protrusion is capable of sliding in the first blocking groove.

In some embodiments, the limit part includes a second fixed protrusion arranged on the adsorption part and a second blocking groove defined by the fixed part, the second fixed protrusion is capable of sliding in the second blocking groove.

In some embodiments, the adsorption part defines a fifth channel, the fixed part is provided with a fourth stopper, the fourth stopper is inserted into the fifth channel, and the elastic member is arranged between the fourth stopper and the fifth channel.

In some embodiments, the limit part includes a first blocking groove defined by the adsorption part and a first fixed protrusion provided on the fixed part, the first fixed protrusion is capable of sliding in the first blocking groove.

In some embodiments, the limit part includes a second fixed protrusion arranged on the adsorption part and a second blocking groove defined by the fixed part.

In some embodiments, the elastic member is an elastic slice arranged on the adsorption part, the fixed part is provided with a pressure column, the pressure column is in contact with the elastic slice.

In some embodiments, a charging coil and a charging circuit are provided in the fixed part.

The beneficial effects of the present disclosure are as follows: a magnetic vehicle bracket of the present disclosure has an elastic member and a limiting part, the adsorption part could be damped and buffered by elasticity, so as to reduce the probability of the equipment falling off, which is caused by shaking when the adsorption part and the mobile phone or other terminal equipment is fixed in a magnetic manner.

### BRIEF DESCRIPTION OF THE DRAWINGS

In order to illustrate the technical solutions in the embodiments of the present disclosure more clearly, the following would briefly introduce the accompanying drawings used in the description of the embodiments. Obviously, the drawings in the following description are only some implementations of the present disclosure. For example, for those of ordinary skilled in the art, other drawings can also be obtained based on these drawings without any creative effort.
FIG. 1 is a first structural schematic view of a magnetic vehicle bracket according to some embodiments of the present disclosure.
FIG. 2 is a second structural schematic view of a magnetic vehicle bracket according to some embodiments of the present disclosure.
FIG. 3 is a third structural schematic view of a magnetic vehicle bracket according to some embodiments of the present disclosure.
FIG. 4 is fourth structural schematic view of a magnetic vehicle bracket according to some embodiments of the present disclosure.

### DETAILED DESCRIPTION

In order to make the above objects, features and advantages of the present disclosure more obvious and easy to understand, the technical solutions in the embodiments of the present disclosure will be clearly and completely described below with reference to the accompanying drawings. It can be understood that, the specific embodiments described herein are only used to explain the present disclosure, but not to limit the present disclosure. In addition, it should be noted that, for the convenience of description, the drawings only show some but not all structures related to the present disclosure. Based on the embodiments of the present disclosure, all other embodiments obtained by those of ordinary skilled in the art without creative work would fall within the protection scope of the present disclosure.

It should be noted that the terms "first", "second", "third", "fourth", "upper", "lower", "one/an end", "another end" and the like in the description and claims of the present disclosure are used to distinguish different objects, and are not necessarily used to describe a specific sequence or sequence. Furthermore, the terms "comprising" "including" and "having", and any variations thereof, are intended to cover non-exclusive inclusion. For example, the embodiments include a series connecting relationships, those skilled in the art may realize the connection effect through various technical means, which is also equivalent to the protection scope of this disclosure.

In the description of the embodiments of the present disclosure, it should also be noted that, unless otherwise expressly specified and limited, the terms "arrange" and "connect" should be understood in a broad sense, for example, it may be a fixed connection or a detachable connection, or integral connection; it could be a mechanical connection, a direct connection, an indirect connection through an intermediate medium, or an internal communication between two elements. For those of ordinary skilled in the art, the specific meanings of the above terms in the present invention could be understood in specific situations.

Reference herein to an "embodiment" means that a particular feature, structure, or characteristic described in connection with the embodiment can be included in at least one embodiment of the present disclosure. The appearances of the phrase in various places in the specification are not necessarily all referring to the same embodiment, nor a separate or alternative embodiment that is mutually exclusive of other embodiments. It is explicitly and implicitly understood by those skilled in the art that the embodiments described herein may be combined with other embodiments.

### EMBODIMENT

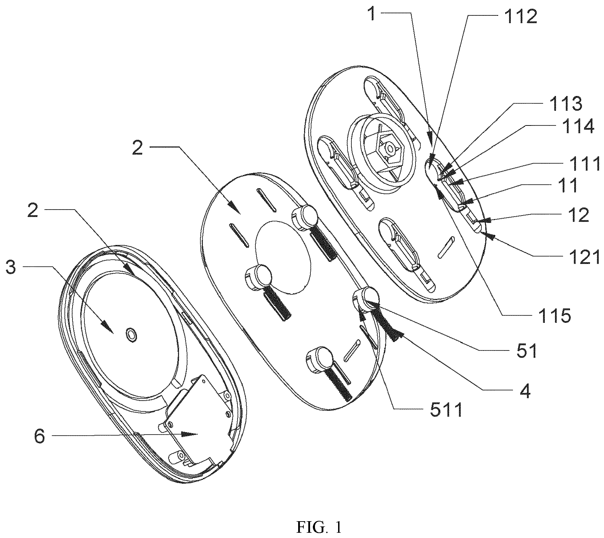

EMBODIMENT 1. As shown in Figs. 1 to 4, a magnetic vehicle bracket includes a fixed part 1 and an adsorption part 2. The adsorption part 3 is provided with a magnetic part 3. An elastic member 4 and a limit part are arranged between the adsorption part 2 and the fixed part 1. the adsorption part 2 is capable of sliding relative to the fixed part 1. The limit part is configured to limit a relative position of the adsorption part 2 and the fixed part 1 after sliding. The adsorption part 2 and the fixed part 1 are restored to an initial position by elastic force of the elastic member 4 after sliding. The fixed part 1 is configured to connect to a corresponding position of the vehicle. The fixed part 1 could connect to the vehicle by sticky connection, or by clamping the fixed part 1 to the fan blades of the vehicle air outlet through a clamping device. The magnetic part 3 provided on the adsorption part 2 is configured to absorb and fix a mobile phone. When the vehicle shakes, the adsorption part 2 and the mobile phone may move downward, and the adsorption part 2 and the fixed part 1 may slide relative to each other. The limit part prevents the adsorption part 2 from being separated from the fixed part 1 during the sliding process. The elastic member 4 makes the displaced fixed part 1 restore to the initial position through elastic force. The elastic member 4 can be a spring or other elastic components that can be restored to the original state after being compressed or stretched by an external force.

EMBODIMENT 2. In some embodiments (as shown in FIG. 1), specifically, the limit part includes a protruding post 51 provided on the adsorption part 2. The fixed part 1 defines a first sliding slot 11 and a first channel 12. The first sliding slot 11 is communicated with the first channel 12. An edge of the first sliding slot 11 is provided with an anti-separation edge 111. The protruding post 51 defines a notch 511. The protruding post 51 is arranged in the first sliding slot 11, and the anti-separation edge 111 is received in the notch 511. The fixed part 1 is provided with an elastic member 4, one end of the elastic member 4 is in contact with the protruding post 51, and the other end is in contact with a top edge 121 of the first channel 12. The protruding post 51 could slide in the first sliding slot 11, and the anti-separation edge 111 is configured to limit the position of the protruding post 51 and prevent the protruding post 51 from being detached. When the vehicle shakes, the adsorption part 2 and the mobile phone move downward and return to the original position under the action of the elastic member 4. In order to facilitate the connection between the fixed part 1 and the adsorption part 2, the fixed part 1 defines a mounting slot 112 communicated with the first sliding slot 11. An elastic arm 115 is arranged between the mounting slot 112 and the first sliding slot 11. A side wall of the elastic arm 115 close to the mounting groove 112 is a smooth wall 113, and another side wall of the elastic arm 115 close to the first sliding slot 11 is a blocking wall 114. The protruding post 51 passes through the mounting slot 112, moves towards the first sliding slot 11, and enters the first sliding slot 11 through the smooth surface 113 of the elastic arm 115. The blocking wall 114 of the elastic arm 115 is configured to prevent the protruding post 51 from sliding to the mounting slot 112 and separating from the fixed part 1.

In order to achieve a more uniform elastic force and structural stability, the protruding post 51, the first sliding slot 11, the first channel 12, and the elastic member 4 form a mounting assembly. A number of the mounting assembly is two or four.

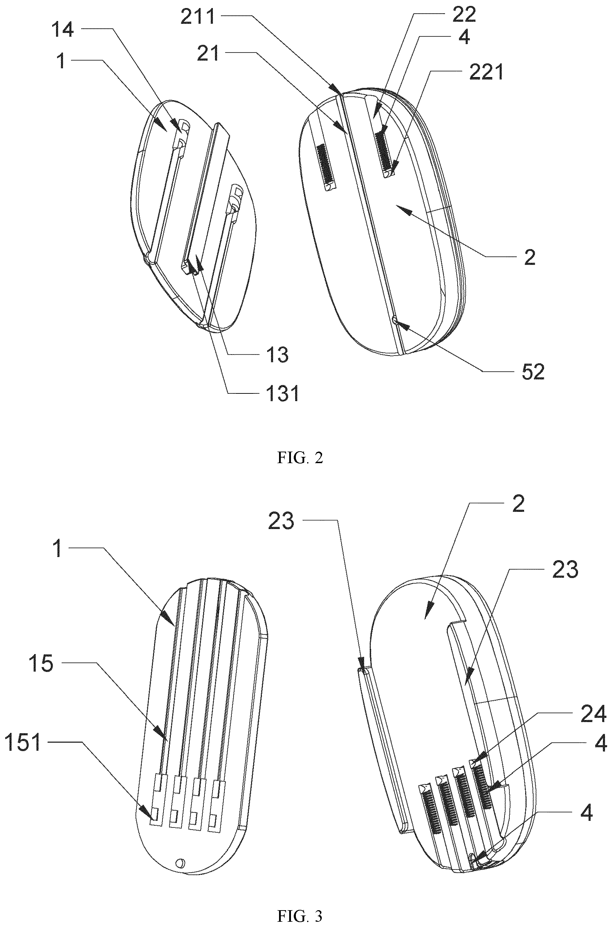

EMBODIMENT 3. In some embodiments, specifically (as shown in FIG. 2), the adsorption part 2 defines a second sliding slot 21. A chute groove 211 communicated with the second sliding slot 21 is defined by the adsorption part 2. The fixed part 1 is provided with a sliding column 13 corresponding to the second sliding slot 21. The sliding column 13 is provided with a limit bar 131, and the limit bar 131 is inserted into the chute groove 211. The limit part includes a stopper 52 arranged in the second sliding slot 21. The adsorption part 2 defines a second channel 22, and the fixed part 1 is provided with a first stopper 14, the first stopper 14 is arranged in the second channel 22. An elastic member 4 is arranged between the first stopper 14 and a bottom edge 221 of the second channel 22. The sliding column 13 could move in the second sliding slot 21. The limit bar 131 is arranged in the chute groove 211 and configured to limit the movement of the sliding column 13 in the direction of the second sliding slot 21. The position where the sliding column 13 moves on the second sliding slot 21 is limited by the stopper 52. When shaking, the mobile phone and the adsorption part 2 move downward, the elastic member 4 is compressed, and the mobile phone and the adsorption part 2 are returned to the initial position by elastic force.

Based on the above-mentioned embodiment, the following scheme is proposed for the conversion of the channel design position (some features are not labeled), the adsorption part 2 is provided with a second sliding slot 21. A chute groove 211 communicated with the second sliding slot 21 is defined by the adsorption part 2. The fixed part 1 is provided with a sliding column 13 corresponding to the second sliding slot 21. The sliding column 13 is provided with a limit bar 131, and the limit bar 131 is inserted into the chute groove 211. The limit part is a stopper 52 arranged in the second sliding slot 21. The fixed part 1 is provided with a third channel, the fixed part 1 is provided with a second stopper, and the adsorption part 2 is provided with a third stopper, the third stopper is arranged in the third channel, and an elastic member 4 is arranged between the second stopper and the third stopper.

EMBODIMENT 4. In some embodiments, specifically (as shown in FIG. 3), an edge of the adsorption part 2 is provided with a first wrapping structure 23. The fixed part 1 is inserted into the wrapping structure 23. The fixed part 1 and the adsorption part 2 are restricted from moving along the insertion direction by the design of the fixed part 1 inserting into the wrapping structure 23. A fourth channel 15 is defined by the fixed part 1. A third stopper 24 is arranged on the adsorption part 2, the third stopper 24 is inserted into the fourth channel 15, and the elastic member 4 is arranged between the third stopper 24 and a bottom edge 151 of the fourth channel 15. It is realized that the adsorption part 2 could be returned to the initial position by the restoring force of the elastic member 4 after the displacement, through the design of the fourth channel 15 and the third stopper 24. The limit part includes a first blocking groove defined by the adsorption part 2 and a first fixed protrusion provided on the fixed part 1, the first fixed protrusion could slide in the first blocking groove. A moving distance range of the adsorption part 2 is limited by limiting the first fixed protrusion in the first blocking groove.

Interchanging positions of the components of the limit part mentioned-above could also realize the above technical effect. Specifically, the limit part includes a second fixed protrusion arranged on the adsorption part and a second blocking groove defined by the fixed part. The second fixed protrusion could slide in the second blocking groove. The position of the wrapping structure could also be exchanged. Specifically, an edge of the fixed part 1 is provided with a second wrapping structure, the adsorption part 2 is inserted into the wrapping structure. Furthermore, the position of the channel could also be exchanged. Specifically, the adsorption part 2 defines a fifth channel, the fixed part 1 is provided with a fourth stopper, the fourth stopper is inserted into the fifth channel, and the elastic member 4 is arranged between the fourth stopper and the fifth channel.

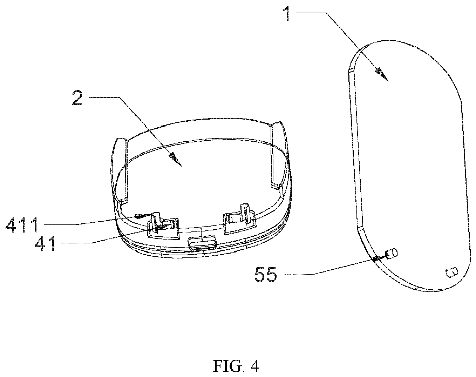

EMBODIMENT 5. In some embodiments, the elastic member 4 (as shown in FIG. 4) includes an elastic slice 41 arranged on the adsorption part. The fixed part 1 is provided with a pressure column 55. The pressure column 55 is in contact with the elastic slice 41. The adsorption part 2 presses the elastic part 411 and is displaced. The elastic part 411 restores the adsorption part 2 to return to the initial position, and at the same time, the depressed position of the elastic slice 41 limits the moving distance of the adsorption part 2, and the pressure column 55 and the elastic The paddle 41 also achieves the effect of the limiting portion.

As an improvement of the above-mentioned embodiment, the present disclosure could also be used in the field of wireless charging (as shown in FIG. 1). Specifically, a charging coil 6 and a charging circuit are provided in the fixed part.

The assembly of technical features of the solutions described in EMBODIMENT 3, EMBODIMENT 4, and EMBODIMENT 5 can be designed in multiple groups, such as 2 or 4 groups. The mobile phone (or other terminal equipment) described in the embodiment has its own magnetic attraction, or it can also be a mobile phone (or other terminal device) with a magnetic adsorption effect through a protective case (or other terminal device).

The magnetic vehicle bracket of the present disclosure has an elastic member and a limiting part, the adsorption part could be damped and buffered by elasticity, so as to reduce the probability of the equipment falling off, which is caused by shaking when the adsorption part and the mobile phone or other terminal equipment is fixed in a magnetic manner.

In summary, the technical solutions in the above embodiments could be combined with each other, and other combinations not described in this specification should also be within the protection scope of the present application.

## Claims

1. A magnetic vehicle bracket, comprising a fixed part (1) and an adsorption part (2); wherein the adsorption part (2) is provided with an magnetic member (3); an elastic member (4) and a limit part are arranged between the adsorption part (2) and the fixed part (1), the adsorption part (2) is capable of sliding relative to the fixed part (1); the limit part is configured to limit a relative position of the adsorption part (2) and the fixed part (1) after sliding; the adsorption part (2) and the fixed part (1) are restored to an initial position by elastic force of the elastic member (4) after sliding.

2. The magnetic vehicle bracket as claimed in claim 1, wherein the limit part comprises a protruding post (51) provided on the adsorption part (2); the first sliding slot (11) is communicated with the first channel (12); an edge of the first sliding slot (11) is provided with an anti-separation edge (111); the protruding post (51) defines a notch (511); the protruding post (51) is arranged in the first sliding slot (11), and the anti-separation edge (111) is received in the notch (511); the fixed part (1) is provided with an elastic member (4), one end of the elastic member (4) is in contact with the protruding post (51), and the other end is in contact with a top edge of the first channel (12).

3. The magnetic vehicle bracket as claimed in claim 2, wherein the fixed part (1) defines a mounting slot (112) communicated with the first sliding slot (11), an elastic arm (115) is arranged between the mounting slot (112) and the first sliding slot (11), a side wall of the elastic arm (115) close to the mounting slot (112) is a smooth wall, and another side wall of the elastic arm (115) close to the first sliding slot (112) is a blocking wall.

4. The magnetic vehicle bracket as claimed in claim 2, wherein the protruding post (51), the first sliding slot (11), the first channel (12), and the elastic member (4) form a mounting assembly, a number of the mounting assembly is two or four.

5. The magnetic vehicle bracket as claimed in claim 1, wherein the adsorption part (2) defines a second sliding slot (21); a chute groove (211) communicated with the second sliding slot (21) is defined by the adsorption part (2); the fixed part (1) is provided with a sliding column (13) corresponding to the second sliding slot (21), the sliding column (13) is provided with a limit bar (131), and the limit bar (131) is inserted into the chute groove (211); the limit part includes a stopper (52) arranged in the second sliding slot (21); the adsorption part (2) defines a second channel (22), and the fixed part (1) is provided with a first stopper (14), the first stopper (14) is arranged in the second channel (22), the elastic member (4) is arranged between the first stopper (14) and a bottom edge of the second channel (22).

6. The magnetic vehicle bracket as claimed in claim 1, wherein the adsorption part (2) defines a second sliding slot (21); a chute groove (211) communicated with the second sliding slot (21) is defined by the adsorption part (2); the fixed part (1) is provided with a sliding column (13) corresponding to the second sliding slot (21), the sliding column (13) is provided with a limit bar, and the limit bar is inserted into the chute groove (211); the limit part includes a stopper (52) arranged in the second sliding slot (21); the adsorption part (2) defines a third channel, and the fixed part is provided with a first stopper, and the adsorption part is provided with a second stopper, the second stopper is arranged in the third channel, and the elastic member (4) is arranged between the first stopper (14) and the second stopper.

7. The magnetic vehicle bracket as claimed in claim 1, wherein an edge of the adsorption part (2) is provided with a first wrapping structure (23), the fixed part (1) is inserted into the first wrapping structure (23).

8. The magnetic vehicle bracket as claimed in claim 1, wherein an edge of the fixed part (1) is provided with a second wrapping structure, the adsorption part (2) is inserted into the second wrapping structure.

9. The magnetic vehicle bracket as claimed in claim 1, wherein a fourth channel (15) is defined by the fixed part (1); a third stopper (24) is arranged on the adsorption part (2), the third stopper (24) is inserted into the fourth channel (15), and the elastic member (4) is arranged between the third stopper and (24) a bottom edge of the fourth channel (15).

10. The magnetic vehicle bracket as claimed in claim 9, wherein the limit part includes a first blocking groove defined by the adsorption part (2) and a first fixed protrusion provided on the fixed part, the first fixed protrusion is capable of sliding in the first blocking groove.

11. The magnetic vehicle bracket as claimed in claim 9, wherein the limit part includes a second fixed protrusion arranged on the adsorption part (2) and a second blocking groove defined by the fixed part (1), the second fixed protrusion is capable of sliding in the second blocking groove.

12. The magnetic vehicle bracket as claimed in claim 7, wherein the adsorption part (2) defines a fifth channel, the fixed part (1) is provided with a fourth stopper, the fourth stopper is inserted into the fifth channel, and the elastic member is arranged between the fourth stopper and the fifth channel.

13. The magnetic vehicle bracket as claimed in claim 12, wherein the limit part includes a first blocking groove defined by the adsorption part (2) and a first fixed protrusion provided on the fixed part (1), the first fixed protrusion is capable of sliding in the first blocking groove.

14. The magnetic vehicle bracket as claimed in claim 12, wherein the limit part includes a second fixed protrusion arranged on the adsorption part (2) and a second blocking groove defined by the fixed part (1).

15. The magnetic vehicle bracket as claimed in claim 7, wherein the elastic member (4) is an elastic slice (41) arranged on the adsorption part (2), the fixed part (1) is provided with a pressure column (55), the pressure column (55) is in contact with the elastic slice (41).
